# EUROPÄISCHE PATENTANMELDUNG

(11) **EP 0 935 926 A1**
(43) Veröffentlichungstag der Anmeldung: **18.08.1999**
(21) Anmeldenummer: 97120917.6
(22) Anmeldetag: 28.11.1997
(51) Int. Cl.: A23G 3/22

(54) **Überziehmaschine zur Verarbeitung von Schokolade und ähnlichen Massen**

(71) Anmelder: SOLLICH GmbH & Co. KG, D-32105 Bad Salzuflen (DE)
(72) Erfinder: Sollich, Helmut, 24407 Rabenkirchen (DE)
(74) Vertreter: Patentanwälte Rehberg + Hüppe

(57) **Zusammenfassung**

Eine Überziehmaschine (1) zur Verarbeitung von Schokolade und ähnlichen Massen, ist mit einem Rahmen (2), einem darin gelagerten, umlaufend angetriebenen und über Umlenkungen (4) geführten Gitterband (3) zur Aufnahme der zu überziehenden Artikel, und mit einem Kreislauf für die flüssige Masse ausgestattet, der einen unter dem Gitterband (3) angeordneten Auffangbehälter (9), eine den tiefsten Bereich des Auffangbehälters (9) erfassende Mischschnecke (17) und eine Förderpumpe, Leitungen und mindestens einen Auslaß aufweist. Der Auffangbehälter (9) weist in seinem oberen Bereich eine erste Tür (24) zur Verbesserung der Zugänglichkeit des Gitterbandes (3) auf. Der Auffangbehälter (9) weist in seinem tiefsten Bereich eine zweite Tür (26) auf, die separat von der ersten Tür (24) handhabbar ist, die Mischschnecke (17) zugänglich macht und eine Totalentleerung des Auffangbehälters (9) ermöglicht.

## Beschreibung

Die Erfindung betrifft eine Überziehmaschine zur Verarbeitung von Schokolade und ähnlichen Massen, mit einem Rahmen, einem darin gelagerten, umlaufend angetriebenen und über Umlenkungen geführten Gitterband zur Aufnahme der zu überziehenden Artikel, und mit einem Kreislauf für die flüssige Masse, der einen unter dem Gitterband angeordneten Auffangbehälter, eine den tiefsten Bereich des Auffangbehälters erfassende Mischschnecke und eine Förderpumpe, Leitungen und mindestens einen Auslaß aufweist, wobei der Auffangbehälter in seinem oberen Bereich eine erste Tür zur Verbesserung der Zugänglichkeit des Gitterbandes aufweist. Eine solche Überziehmaschine dient dazu, temperierte Schokolade auf Artikel auf dem Gitterband aufzubringen, wobei die Schokolade im Überschuß in einem Kreislauf durch die Überziehmaschine fließt und dabei auch das Gitterband durchdringt sowie mit einer Vielzahl von Teilen der Überziehmaschine in Berührung kommt. Es kann sich um eine Überziehmaschine handeln, die eine Überziehstation aufweist, in der die flüssige Schokolade im freien Fall auf die Artikel gelangt. Die Überziehmaschine kann auch mit einer Bodenwallstation ausgestattet sein und/oder ein Gebläse zum Abblasen überschüssiger Schokolade aufweisen. Auch andere Massen als Schokolade, beispielsweise fetthaltige Massen, Überzugsmassen, Karamellmassen u. dgl. können mit einer solchen Überziehmaschine verarbeitet werden.

Eine Überziehmaschine der eingangs beschriebenen Art ist aus der DE 42 43 814 C1 bekannt. Die flüssige Masse wird in einem Kreislauf geführt. Unterhalb des Gitterbandes ist ein Auffangbehälter vorgesehen, der Seitenwände aufweist, die sich bis kurz unterhalb des oberen Trums des Gitterbandes erstrecken. Das untere Trum des Gitterbandes und die entsprechenden Umlenkungen sind damit innerhalb des Auffangbehälters untergebracht. Der Auffangbehälter besitzt eine sich quer über die Maschinenbreite erstreckende Vertiefung, die den tiefsten Bereich des Auffangbehälters bildet und in der auf gleicher Achse eine Mischschnecke und eine Förderpumpe angeordnet sind, um die flüssige Masse durch eine Leitung nach oben, z. B. in einen Schleierkasten zu pumpen, aus dessen Düse die Masse austritt. Die Masse gelangt im freien Fall auf die zu überziehenden Artikel. Überschüssige Masse durchdringt das Gitterband und wird von dem Auffangbehälter aufgefangen. Der Auffangbehälter erstreckt sich über die Breite und Länge des Gitterbandes. Er weist im Bodenbereich eine schiefe Ebene auf, die in die Vertiefung einmündet, sodaß auch von dem Gitterband mitgeschleppte Masse letztlich in den Kreislauf zurückgelangt.

Bekannte Überziehmaschinen dieser Art weisen im oberen Bereich, also oberhalb der Vertiefung und etwa auf der Höhe des Gitterbandes eine Tür auf, die dazu dient, das Gitterband bei einem Gitterbandwechsel oder das Gitterband und die Umlenkungen für eine Reinigung der Elemente innerhalb des Auffangbehälters besser zugänglich zu machen. Elemente im Auffangbehälter, die vergleichsweise tiefer angeordnet sind, insbesondere die Mischschnecke, werden durch die Tür nur bedingt zugänglich. Dies stört insbesondere bei einem Massewechsel mit Totalentleerung des Auffangbehälters und bei einer Reinigung der tiefer angeordneten Elemente.

Bei einem Massewechsel in der Überziehmaschine, also wenn beispielsweise eine dunkle Schokolade zuvor verarbeitet worden ist und nachfolgend Artikel mit einer hellen Schokolade oder gar einer weißen Überzugsmasse behandelt werden sollen, entsteht das Problem, die zuvor verarbeitete Masse aus der Überziehmaschine zu entfernen und sämtliche Teile, die mit dieser Masse in Berührung gekommen sind, zu reinigen, damit dann die neue Masse, z. B. die weiße Überzugsmasse, in die Überziehmaschine eingegeben werden kann.

Zur Durchführung eines solchen Massewechsels ist es bekannt, die Überziehmaschine mit der zuvor verarbeiteten Masse aufzuheizen und zu entleeren, wobei die zuvor verarbeitete Masse über eine Rückförderpumpe hinweggeführt wird. Es wird sodann eine Spülmasse, beispielsweise Kakaobutter oder eine andere Fettlösung in die Überziehmaschine eingebracht. Die Überziehmaschine wird ohne Durchlauf von Artikeln inganggesetzt, so daß die Spülmasse fortlaufend umgewälzt und beispielsweise über eine Überziehstation umläuft. Dabei erreicht die Spülmasse auch einen großen Teil der mit der alten Masse verschmutzten Teile der Überziehmaschine und reinigt diese durch Aufschmelzen mehr oder weniger vollständig. Jedoch werden von der Spülmasse nicht alle Teile der Überziehmaschine erreicht, so daß die Reinigungswirkung nur unvollkommen ist. Die Spülmasse wird am Ende der Reinigung der Überziehmaschine von dieser abgezogen und beispielsweise in der normalen Schokoladeproduktion verarbeitet. Anschließend kann die neue Überzugsmasse eingefüllt werden.

Es ist weiterhin bekannt, die wesentlichen Teile der Überziehmaschine aus Edelstahl auszubilden und an das Entleeren der Überziehmaschine mit der alten Masse eine Naßreinigung mit heißem Wasser unter Druck anzuschließen. Diese Naßreinigung ist in mehrerlei Hinsicht problematisch. Beim Aufbringen eines Sprühstrahles von heißem Wasser auf das Gitterband entsteht eine erhebliche Sprüh- und Verteilungswirkung, so daß die unterhalb des oberen Trums des Gitterbandes angeordneten Elemente, auch bei geöffneter Tür, nur sehr unvollkommen erreicht werden. Durch das bei dieser Reinigung notwendigerweise in die Überziehmaschine eingeschleppte heiße Wasser entsteht eine Kontamination, indem günstige Bedingungen für Bakterien geschaffen werden. Um dieser Gefahr entgegenzuwirken, ist es bekannt, dem Reinigungsvorgang mit heißem Wasser einen Trocknungsvorgang durch das Aufblasen von heißer Luft anzuschließen. Auch dabei werden die Einzelteile der Maschine aufgeheizt, und der Trocknungsvorgang wird über einen entsprechend langen Zeitraum durchgeführt. Dennoch werden von der Trocknung nicht alle Teile erfaßt, und es besteht nicht die Möglichkeit zu kontrollieren, ob wirklich alle Teile, die vorher mit heißem Wasser benetzt wurden, auch trocken sind.

Um eine Reinigung der Maschinenteile mit einer Spülmasse bei einem Massewechsel mit größerer Sicherheit und verbesserter Zugänglichkeit der Aggregate unterhalb des oberen Trums des Gitterbandes durchzuführen ist es aus der DE 42 43 814 C1 bekannt der Spanneinrichtung des Gitterbandes einen das Hochheben des Gitterbandes ermöglichenden vergrößerten Spannweg zu geben.

Andererseits könnte man daran denken, eine sich in Längsrichtung der Überziehmaschine erstreckende Seitenwand des Auffangbehälters abnehmbar zu gestalten und/oder die Tür im oberen Bereich der Querseitenwand des Auffangbehälters so zu vergrößern, daß sie sich im wesentlichen über die gesamte Höhe des Auffangbehälters erstreckt und damit auch den tieften Punkt oder Bereich des Auffangbehälters zugänglich macht. Diese sich anbietenden Möglichkeiten haben jedoch den Nachteil, daß auch dann eine Totalentleerung des Auffangbehälters stattfinden muß, wenn nur ein Gitterbandwechsel ansteht.

Der Erfindung liegt die Aufgabe zugrunde, eine Überziehmaschine der eingangs beschriebenen Art bereitzustellen, die wartungs- und handhabungsfreundlicher gestaltet ist, insbesondere hinsichtlich eines Gitterbandwechsels und/oder eines Massewechsels.

Erfindungsgemäß wird dies durch die Überziehmaschine der eingangs beschriebenen Art dadurch erreicht, daß der Auffangbehälter in seinem tiefsten Bereich eine zweite Tür aufweist, die separat von der ersten Tür handhabbar ist, die Mischschnecke zugänglich macht und eine Totalentleerung des Auffangbehälters ermöglicht.

Die Erfindung geht von dem Gedanken aus, den Auffangbehälter der Überziehmaschine mit zwei voneinander getrennten und separat zu handhabbaren Türen auszustatten, von denen die erste Tür, wie bisher auch, im oberen Bereich der eingangsseitigen Querseitenwand des Auffangbehälters angeordnet ist. Diese erste Tür erstreckt sich in der Höhe über einen großen Teil des Gitterbandes mit seinem Antrieb und den Umlenkungen, so daß nach dem Öffnen dieser Tür ein verbesserter Zugang zu den genannten Elementen gegeben ist. Damit wird zugleich die Möglichkeit eröffnet, bei einem Gitterbandwechsel oder einer Reparatur an einer Umlenkung des Gitterbandes von einer Totalentleerung absehen zu können, so daß sich die Benutzung dieser oberen ersten Tür auch für die Behebung von Betriebsunterbrechungen, die kurzfristig während der Produktion möglich sind, anbietet. Andererseits ist die untere Tür so ausgebildet und angeordnet, daß auch sie separat und unabhängig von der oberen Tür geöffnet bzw. geschlossen werden kann. Die untere Tür ist so plaziert, daß bei ihrem Öffnen insbesondere die Mischschnecke, aber auch andere Elemente, gleichsam von unten her, zugänglich werden, so daß dort eine Reinigung erfolgen kann. So ist es beispielsweise möglich, an den Wendeln der Mischschnecke anhaftende Schokolademasse mit einem Schaber zu entfernen und/oder eine Spülung der Elemente der Überziehmaschine im Auffangbehälter mit einem gebündelten Wasserstrahl durchzuführen und das Spülwasser durch die geöffnete untere Tür am tiefsten Punkt des Auffangbehälters abzuführen. Die zweite Tür wird in der Regel nur dann geöffnet, wenn eine komplette Reinigung gewünscht wird, z. B. bei einem Massewechsel von dunkler auf helle Schokolade o. dgl.. Die neue Überziehmaschine hat den weiteren Vorteil, daß sie eine Reinigung der im Auffangbehälter befindlichen Elemente an Ort und Stelle ermöglicht und daher die Überziehmaschine auch bei beengten Platzverhältnissen eingebaut, gewartet und gereinigt werden kann. Es ist nicht mehr erforderlich, Massebehälter seitlich aus der Überziehmaschine herausziehbar und verfahrbar zu gestalten und den doppelten Platz im Vergleich zur Breite der Überziehmaschine vorzuhalten.

Die Anordnung der ersten und der zweiten Tür verbessert auch den Trocknungsvorgang der Elemente im Auffangbehälter nach einer Naßreinigung. Warmluft kann so geschickt über die Elemente im Auffangbehälter geleitet werden, wodurch der Trocknungsvorgang begünstigt und beschleunigt wird.

Die erste Tür und die zweite Tür am Auffangbehälter können über die Breite der Überziehmaschine durchgehend vorgesehen sein. Dies bedeutet, daß sich die Türen im wesentlichen über die Breite der jeweiligen Überziehmaschine erstrecken. Überziehmaschinen werden in unterschiedlichen Breiten hergestellt und benutzt. Es versteht sich, daß die Breite der Türen in aller Regel etwas größer als die Breite des jeweiligen Gitterbandes gestaltet ist. Gleichwohl ist die Anordnung von Auflagern rechts und links an der Querseitenwand des Auffangbehälters für die beiden Türen erforderlich.

Die erste Tür am Auffangbehälter kann oberhalb und die zweite Tür unterhalb des normalen Füllstandes der flüssigen Schokolade im Auffangbehälter angeordnet sein. Der normale Füllstand der flüssigen Schokolade ist etwas höher, als es dem Durchmesser der Mischschnecke entspricht, so daß die Mischschnecke bei ihrer Mischarbeit vollständig unterhalb der Schokolademasse liegt. Die erste obere Tür kann auch dann geöffnet werden, wenn sich Masse im Auffangbehälter befindet.

Zweckmäßig sind die erste und die zweite Tür an der einlaufseitigen Stirnseite des Auffangbehälters angeordnet. Der Einlauf der Überziehmaschine wird durch die Laufrichtung des Gitterbandes bestimmt. Die Vertiefung des Auffangbehälters ist in der Nähe des einlaufseitigen Stirnendes des Auffangbehälters angeordnet, also an einer Stelle, die in relativ kurzer horizontaler Entfernung zu dem Schleierkasten bzw. dessen Düse angeordnet ist, damit überschüssige Masse auf kurzem Wege in die Vertiefung des Auffangbehälters zurückfließen und damit im Kreislauf verbleiben kann. Die Wandung des Auffangbehälters ist zumindest teilweise beheizbar. Dies geschieht in der Regel durch eine doppelwandige Ausbildung und die Anwendung eines entsprechenden Warmwassermantels. Es ist nicht unbedingt erforderlich, die Türen ebenfalls doppelwandig auszubilden und in diesen Warmwasserkreislauf mit einzubeziehen.

Die erste und die zweite Tür können an der einlaufseitigen Stirnseite des Auffangbehälters vertikal ausgerichtet angeordnet sein. Diese vertikale Ausrichtung ergibt ein Maximum an Zugänglichkeit, so daß auch Reinigungswerkzeuge durch diese bei geöffneten Türen sich ergebenden Öffnungen besonders einfach und sicher gehandhabt werden können. Die zweite untere Tür ist dabei immer so angeordnet, daß die tiefste Stelle des Behälters mit erfaßt wird, also Spülwasser beispielsweise durch Schwerkrafteinwirkung bei geöffneter unterer Tür aus dem Auffangbehälter herausfließen kann.

Die erste und/oder die zweite Tür können an dem Auffangbehälter abnehmbar ausgebildet sein. Wenn die beiden Türen abnehmbar gestaltet sind, also keine Scharniere aufweisen, trägt dies einerseits zu einer einfachen Gestaltung bei und dient andererseits der freien Zugänglichkeit der Elemente innerhalb des Auffangbehälters. Auch bei beengten Einbauverhältnissen, bei denen ein Schwenken einer Tür nicht möglich wäre, sind solche abnehmbaren Türen mit Vorteil einsetzbar.

An der ersten und/oder der zweiten Tür können Schnellverschlüsse vorgesehen sein, wie sie an sich bekannt sind. So ist es möglich, daß zum Schließen der zweiten Tür ein über die Breite der Überziehmaschine reichender Klemmbügel und auf diesem eine Anzahl von Druckschrauben vorgesehen sind. Aber auch andere Realisierungsmöglichkeiten stehen dem Fachmann zur Verfügung.

Die zweite Tür am Auffangbehälter ist flüssigkeitsdicht schließbar. Zu diesem Zweck kann eine umlaufende Dichtung aus einem elastischen Dichtungselement vorgesehen sein.

Die zweite Tür am Auffangbehälter sollte eine größere Höhe als der Radius der Mischschnecke aufweisen. Damit wird die gesamte Mischschnecke durch die zweite Tür hindurch zugänglich.

Die Erfindung wird anhand mehrerer Ausführungsbeispiele weiter erläutert und beschrieben. Es zeigen:
- Fig. 1: einen schematisierten Längsschnitt durch eine erste Ausführungsform der Überziehmaschine,
- Fig. 2: eine eingangsseitige Ansicht auf die Überziehmaschine gemäß Fig. 1 und
- Fig. 3: eine Detaildarstellung einer zweiten Ausführungsform der Überziehmaschine.

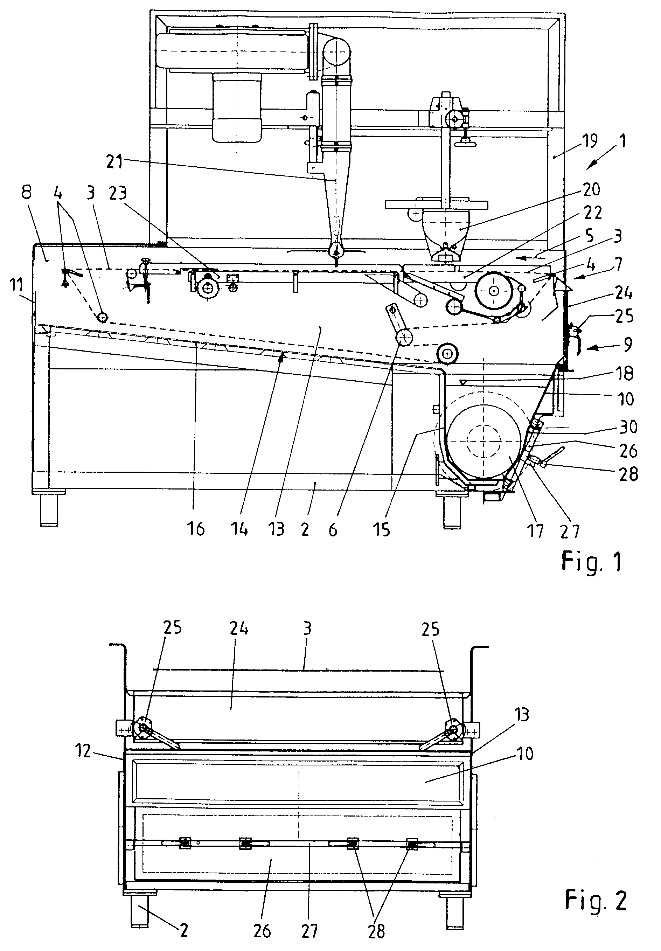

In Fig. 1 ist in einem schematisierten Längsschnitt bzw. einer Seitenansicht eine Überziehmaschine 1 dargestellt. Die Überziehmaschine 1 weist einen Rahmen 2 auf, in welchem ein Gitterband 3 über Umlenkungen 4 geführt angeordnet ist. Die Umlenkungen 4 können aus Umlenkrollen, Walzen, messerartigen Umlenkungen u. dgl. bestehen. Das Gitterband 3 besteht aus Maschen bzw. einem Gewirk aus Stahldraht und wird in Richtung des Pfeiles 5 umlaufend angetrieben. Eine Spannrolle 6 dient dazu, dem Gitterband 3 die nötige Spannung um die Umlenkungen 4 zu geben. Auf der rechten Seite befindet sich ein Einlauf 7, d. h. hier werden die Artikel, die mit der flüssigen Masse überzogen werden sollen, auf das Gitterband 3 aufgelegt. Auf der anderen Seite befindet sich ein Auslauf 8, meist in Form eines hier nicht näher dargestellten Förderbandes.

Unterhalb des Gitterbandes 3, genauer gesagt unterhalb des oberen Trums des Gitterbandes 3, befindet sich ein Auffangbehälter 9 für die überschüssige Schokolademasse, die von den Artikeln auf dem Gitterband 3 abtropft, das Gitterband 3 durchdringt und in Schwerkraftrichtung in den Auffangbehälter 9 eintritt. Der Auffangbehälter 9 selbst besitzt eine einlaufseitige Stirnseite 10, eine auslaufseitige Stirnwand 11 und rechts und links entlang der Länge der Überziehmaschine 1 Seitenwände 12 und 13. Der Boden 14 des Auffangbehälters 9 besitzt eine Vertiefung 15 und eine als schiefe Ebene 16 anschließende und angeordnete Bodenwandung. Der Auffangbehälter 9 umschließt mit seinem oberen Bereich wesentliche Elemente des Gitterbandes 3 und der Umlenkungen 4 mit Ausnahme des oberen Trums des Gitterbandes 3, welches geringfügig höher angeordnet ist als die Höhe der Wandungen 10, 11, 12, 13 des Auffangbehälters 9. Im unteren Bereich des Auffangbehälters 9 bzw. in der Vertiefung 15 ist eine Mischschnecke 17 mit horizontal angeordneter Achse vorgesehen. Die Mischschnecke 17 reicht über einen Großteil der Breite der Überziehmaschine 1. Auf der Achse der Mischschnecke 17 ist auch eine nicht näher dargestellte Förderpumpe für die flüssige Masse vorgesehen. Im Bereich der Vertiefung 15 bildet sich der normale Füllstand 18 der flüssigen Schokolademasse aus. Die Schokolademasse wird von der Mischschnecke 17 kontinuierlich durchmischt und mit der Förderpumpe und einer anschließenden Leitung nach oben gefördert. Im oberen Bereich oberhalb des Gitterbandes 3 ist der Rahmen 2 zu einem Aufsetzrahmen 19 erweitert, der zur Lagerung eines Schleierkastens 20 dient, in den hinein die flüssige Masse über die Förderpumpe transportiert wird. Der Schleierkasten 20 besitzt an seinem unteren Ende eine in der Regel über die Arbeitsbreite der Überziehmaschine 1 reichende Düse, aus der die flüssige Schokolade nach Art eines Vorhangs im freien Fall auf das obere Trum des Gitterbandes 3 und damit die auf diesem aufliegenden Artikel herabfällt. Durch den Antrieb des Gitterbandes 3 werden die Artikel durch den Vorhang aus flüssiger Schokolade hindurchgeführt und dabei überzogen. Überschüssige Masse fällt durch das Gitterband 3 hindurch und wird von dem Auffangbehälter 9 aufgefangen, wobei sich die Masse in der Vertiefung 15 des Auffangbehälters 9 sammelt und damit wiederum im Kreislauf geführt werden kann. Der Aufsetzrahmen 19 dient auch zur Unterbringung eines Gebläses 21, mit dessen Hilfe Luft von oben auf die Artikel bzw. das Gitterband 3 geblasen wird, um noch nicht erstarrte Masse abzublasen und möglichst dünne Überzüge auf den Artikeln zu hinterlassen. Auch von dieser Stelle gelangt überschüssige Schokolade über die schiefe Ebene 16 des Auffangbehälters 9 in die Vertiefung 15 zurück. Es versteht sich, daß das Gitterband 3 bei seinem Umlauf in Richtung des Pfeiles 5 selbst auch Schokolademasse mitschleppt, die dann ebenfalls von dem Auffangbehälter 9 aufgefangen und in die Vertiefung 15 zurückgeleitet wird. Unterhalb des oberen Trums des Gitterbandes 3 kann im Eingangsbereich, also in Zuordnung zu dem Schleierkasten 20, eine Boden-Überziehstation 22 vorgesehen sein. Im Mittelbereich unter dem oberen Trum des Gitterbandes 3 kann eine Rüttelstation 23 vorgesehen sein, die die Aufgabe hat, überschüssige, noch nicht erstarrte Masse von den Artikeln und dem Gitterband 3 abzurütteln. Auch diese Masse gelangt letztlich über die schiefe Ebene 16 in die Vertiefung 15 des Auffangbehälters 9.

An der eingangsseitigen Stirnseite 10 des Auffangbehälters 9 ist im oberen Bereich eine erste Tür 24 untergebracht. Die Tür 24 erstreckt sich im wesentlichen über die Breite der Überziehmaschine 1, mindestens aber über die Breite des Gitterbandes 3. Die Tür 24 hat die Form einer Klappe. Die verdeckt im angesetzten Zustand eine Öffnung in dem Auffangbehälter 9. Hebelverschlüsse 25 dienen der Fixierung der Tür 24 in geschlossenem Zustand an der vorgesehenen Stelle. Insbesondere aus Fig. 1 ist ersichtlich, daß die Größe und Anordnung der Tür 24 auf das Gitterband 3 mit seinen Umlenkungen 4 abgestimmt ist. Die Tür 24 befindet sich mit Abstand oberhalb des normalen Füllstandes 18 in der Vertiefung 15. Durch Betätigung der Hebelverschlüsse 25 kann die Tür 24 abgenommen werden. Damit wird in der Stirnseite 10 eine Öffnung frei, durch die hindurch das Gitterband 3 und die Umlenkungen 4 - zumindest im Bereich des Einlaufes 7 - besser zugänglich sind. Diese Zugänglichkeit wird genutzt, um einen Wechsel des Gitterbandes 3 herbeizuführen oder Reparaturen an dem Gitterband 3 oder den Umlenkungen 4 herbeizuführen. Die Tür 24 ist auch nützlich, um kleinere Störungen an Elementen des Gitterbandes 3 und der Umlenkungen 4 während des Betriebes zu beseitigen. Es ist erkennbar, daß das Öffnen bzw. Abnehmen der Tür 24 keine Totalentleerung des Auffangbehälters 9 voraussetzt. Die in der Überziehmaschine 1 befindliche Masse kann vielmehr dort verbleiben, während die Tür 24 abgenommen wird.

Im unteren Bereich des Auffangbehälters 9, also im Bereich der Vertiefungen 15, ist eine zweite Tür 26 vorgesehen. Die Tür 26 kann separat und unabhängig von der Tür 24 betätigt werden. Ein Öffnen der Tür 26 setzt jedoch eine vorherige Entleerung des Auffangbehälters 9 voraus. So wie die erste Tür 24 im wesentlichen dem Gitterband und den Umlenkungen 4 örtlich zugeordnet ist, besteht eine Zuordnung zwischen der zweiten Tür 26 und der Mischschnecke 17 in der Vertiefung 15. Die zweite Tür 26 ist darüber hinaus so plaziert, daß sie in geschlossenem Zustand die tiefste Stelle der Vertiefung 15 bzw. des Auffangbehälters 9 abschließt und in der geöffneten Stellung freigibt. Auch die zweite Tür 26 kann abnehmbar gestaltet sein. Eine Möglichkeit zur Fixierung ihrer Schließstellung besteht aus einem über die Breite der Überziehmaschine 1 (Fig. 2) reichenden Klemmbügel 27, an welchem eine Anzahl Druckschrauben 28 angeordnet sind, um die erforderliche Anpressung an die rahmenartig ausgebildete Öffnung in der Vertiefung 15 herbeizuführen. Die zweite Tür 26 ist in der Schließstellung flüssigkeitsdicht an die Öffnung in der Vertiefung 15 ansetzbar. Fig. 1 laßt erkennen, daß durch die geöffnete zweite Tür 26 nicht nur die Förderwendel der Mischschnecke 17 zugänglich wird, sondern auch die darüber befindlichen Elemente im Bereich des Gitterbandes 3, so auch der Antrieb und die Spannrolle 6. Fig. 1 läßt erkennen, daß die erste Tür 24 vertikal ausgerichtet in der Stirnseite 10 des Auffangbehälters 9 angeordnet ist, während die zweite Tür 26 eine geringfügige Schräglage zur Vertikalen einnimmt. Die effektive Höhe der durch die zweite Tür 26 verschließbaren Öffnung ist aber auch dann immer noch größer als der Radius der Förderwendel der Mischschnecke 17, so daß nach einer Entleerung und dem Öffnen der zweiten Tür 26 an der Förderwendel der Mischschnecke 17 anhaftende Schokoladereste mit einem Kunststoffschaber oder einem ähnlichen Werkzeug entfernt werden können. Selbstverständlich ist es möglich, die beiden Türen 24 und 26 zu schließen und für eine weitere Reinigung die Überziehmaschine 1 beispielsweise mit heißem Wasser oder einer anderen Reinigungsflüssigkeit zu betreiben, um erstarrte Schokoladereste an den Elementen zu lösen und mit der Reinigungsflüssigkeit nach dem Öffnen der unteren Tür 26 abfließen zu lassen.

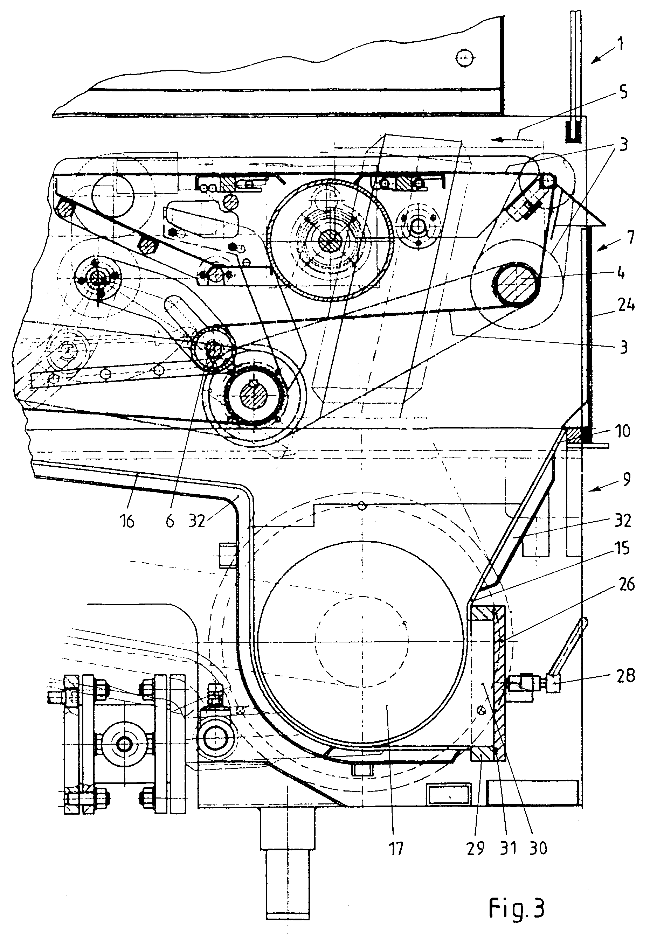

Fig. 3 zeigt eine andere Ausführungsform des Auffangbehälters 9 der Überziehmaschine 1. Hier ist auch die untere Tür 26 vertikal ausgerichtet angeordnet. Im Bereich der Vertiefung 15 ist ein Rand 29 gebildet, der die Öffnung 30 umschließt. Die Tür 26 ist deckelartig ausgebildet und besitzt eine umlaufende Dichtung 31 aus elastomerem Material, so daß in der Schließstellung ein flüssigkeitsdichter Abschluß der Öffnung 30 erzielbar ist. Auch hier ist die Tür 26 wiederum der Mischschnecke 17 so zugeordnet, daß die effektive Höhe der Tür 26 größer als der Radius der Wendel der Mischschnecke 17 ist, so daß sämtliche Bereiche der Mischschnecke 17 durch die geöffnete Tür 26 hindurch zugänglich sind. Gleichzeitig ist auch hier die Tür 26 so plaziert, daß in ihrer Offenstellung die in dem Auffangbehälter befindliche Flüssigkeit frei ablaufen kann. Fig. 3 läßt auch erkennen, daß zumindest große Bereiche der Wandung des Auffangbehälters 9 doppelwandig ausgebildet sind. Damit wird ein Hohlraum 32 geschaffen, durch den hindurch temperiertes Wasser geführt werden kann, um ein Erstarren der flüssigen Schokolademasse an der Innenwandung des Auffangbehälters 9 zu vermeiden und so dafür zu sorgen, daß die Schokolademasse während des Überziehens immer wieder in die Vertiefung 15 und damit in den Bereich der Mischschnecke 17 und der anschließenden Förderpumpe gelangen kann und insoweit im Kreislauf verbleibt. Es versteht sich, daß die Überziehmaschine 1 bzw. deren Auffangbehälter 9 in bekannter Weise an eine Temperiermaschine angeschlossen sind, in welcher die Schokolademasse ordnungsgemäß temperiert und in diesem Zustand der Überziehmaschine 1 zugeleitet wird. Auch hier ist ein Kreislauf gebildet, um günstige Produktionsbedingungen aufrechtzuerhalten.

### BEZUGSZEICHENLISTE

- 1: - Überziehmaschine
- 2: - Rahmen
- 3: - Gitterband
- 4: - Umlenkung
- 5: - Pfeil
- 6: - Spannrolle
- 7: - Einlauf
- 8: - Auslauf
- 9: - Auffangbehälter
- 10: - Stirnseite
- 11: - Stirnwand
- 12: - Seitenwand
- 13: - Seitenwand
- 14: - Boden
- 15: - Vertiefung
- 16: - schiefe Ebene
- 17: - Mischschnecke
- 18: - Füllstand
- 19: - Aufsetzrahmen
- 20: - Schleierkasten
- 21: - Gebläse
- 22: - Boden-Überziehstation
- 23: - Rüttelstation
- 24: - erste Tür
- 25: - Hebelverschluß
- 26: - zweite Tür
- 27: - Klemmbügel
- 28: - Druckschraube
- 29: - Rand
- 30: - Öffnung
- 31: - Dichtung
- 32: - Hohlraum

## Patentansprüche

1. Überziehmaschine (1) zur Verarbeitung von Schokolade und ähnlichen Massen, mit einem Rahmen (2), einem darin gelagerten, umlaufend angetriebenen und über Umlenkungen (4) geführten Gitterband (3) zur Aufnahme der zu überziehenden Artikel, und mit einem Kreislauf für die flüssige Masse, der einen unter dem Gitterband (3) angeordneten Auffangbehälter (9), eine den tiefsten Bereich des Auffangbehälters (9) erfassende Mischschnecke (17) und eine Förderpumpe, Leitungen und mindestens einen Auslaß aufweist, wobei der Auffangbehälter (9) in seinem oberen Bereich eine erste Tür (24) zur Verbesserung der Zugänglichkeit des Gitterbandes (3) aufweist, **dadurch gekennzeichnet**, daß der Auffangbehälter (9) in seinem tiefsten Bereich eine zweite Tür (26) aufweist, die separat von der ersten Tür (24) handhabbar ist, die Mischschnecke (17) zugänglich macht und eine Totalentleerung des Auffangbehälters (9) ermöglicht.

2. Überziehmaschine nach Anspruch 1, **dadurch gekennzeichnet**, daß die erste Tür (24) und die zweite Tür (26) am Auffangbehälter (9) über die Breite der Überziehmaschine (1) durchgehend vorgesehen sind.

3. Überziehmaschine nach Anspruch 1 oder 2, **dadurch gekennzeichnet**, daß die erste Tür (24) am Auffangbehälter (9) oberhalb und die zweite Tür (26) unterhalb des normalen Füllstandes (18) der flüssigen Schokolade im Auffangbehälter (9) angeordnet sind.

4. Überziehmaschine nach Anspruch 1 bis 3, **dadurch gekennzeichnet**, daß die erste und die zweite Tür (24, 26) an der einlaufseitigen Stirnseite (10) des Auffangbehälters (9) angeordnet sind.

5. Überziehmaschine nach Anspruch 4, **dadurch gekennzeichnet**, daß die erste und die zweite Tür (24, 26) an der einlaufseitigen Stirnseite (10) des Auffangbehälters (9) vertikal ausgerichtet angeordnet sind.

6. Überziehmaschine nach einem der Ansprüche 1 bis 5, **dadurch gekennzeichnet**, daß die erste und/oder die zweite Tür (24, 26) an dem Auffangbehälter (9) abnehmbar ausgebildet sind.

7. Überziehmaschine nach Anspruch 6, **dadurch gekennzeichnet**, daß an der ersten und/oder der zweiten Tür (24, 26) Schnellverschlüsse (26, 28) vorgesehen sind.

8. Überziehmaschine nach Anspruch 7, **dadurch gekennzeichnet**, daß zum Schließen der zweiten Tür (26) ein über die Breite der Überziehmaschine (1) reichender Klemmbügel (27) und auf diesem eine Anzahl von Druckschrauben (28) vorgesehen sind.

9. Überziehmaschine nach Anspruch 1, **dadurch gekennzeichnet**, daß die zweite Tür (26) am Auffangbehälter (9) flüssigkeitsdicht schließbar ist.

10. Überziehmaschine nach Anspruch 4 oder 5, **dadurch gekennzeichnet**, daß die zweite Tür (26) am Auffangbehälter (9) eine größere Höhe als der Radius der Mischschnecke (17) aufweist.
